# FASCICULE DE BREVET EUROPEEN

(11) **EP 4 157 629 B1**
(45) Date de publication et mention de la délivrance du brevet: **26.06.2024**
(21) Numéro de dépôt: 21732427.6
(22) Date de dépôt: 05.05.2021
(51) Int. Cl.: B32B 7/022, B32B 7/027, B32B 7/05, B32B 7/06, B32B 7/12, B32B 27/08, B32B 27/18, B32B 27/30, B32B 27/32, B32B 27/34, B32B 27/36

(54) **FILM MULTICOUCHE POUR EMBALLAGE REFERMABLE AVEC COUCHE DE POLYETHYLENE OBTENU PAR CO-EXTRUSION A PLAT**
MEHRSCHICHTFOLIE FÜR WIEDERVERSCHLIESSBARE VERPACKUNG MIT EINER DURCH COEXTRUSION HERGESTELLTEN POLYETHYLENSCHICHT
MULTILAYER FILM FOR RECLOSABLE PACKAGE WITH A POLYETHYLENE LAYER OBTAINED BY FLAT SHEET COEXTRUSION

(30) Priorité: 26.05.2020 FR 2005557
(43) Date de publication de la demande: 05.04.2023
(73) Titulaire: Bostik SA, 92700 Colombes (FR)
(72) Inventeur: ROBERT, Christophe, 60280 VENETTE (FR); PUCHOIS, Romain, 60280 VENETTE (FR)
(74) Mandataire: Arkema Patent
(86) Numéro de dépôt international: PCT/FR2021/050772
(87) Numéro de publication internationale: WO 2021/240086

(56) Documents cités:
- FR-A1- 3 023 560
- FR-A1- 3 075 091
- FR-A1- 3 088 239

## Description

La présente invention a pour objet un film multicouche comprenant une couche constituée par une composition auto-adhésive thermofusible et deux couches à base de polyéthylène, qui peut être fabriqué par un procédé de co-extrusion à plat, lequel procédé est également objet de l'invention. Elle concerne enfin l'utilisation dudit film multicouche pour la fabrication d'emballages (ou barquettes) refermables, destinés en particulier au conditionnement de denrées alimentaires, notamment périssables.

On connaît, notamment par les demandes WO 02/064694, WO 12/045950, FR 3 088 239, et WO 12/045951, des films multicouches dont une couche est constituée par une composition auto-adhésive thermofusible et qui sont destinés à la fabrication d'emballages (ou barquettes) refermables.

Les emballages refermables, par exemple sous forme de barquettes ou sachets, sont utilisés dans l'industrie agroalimentaire et la grande distribution pour conditionner des denrées périssables, notamment des produits frais. De tels emballages sont également décrits par le brevet EP 1053952.

Après une première ouverture de l'emballage, et consommation d'une partie du produit alimentaire qu'il contient, le consommateur peut manuellement refermer l'emballage de façon substantiellement hermétique et assurer par conséquent, le cas échéant après mise au réfrigérateur, la conservation de la portion restante du produit. Une succession de réouvertures et de refermetures est également possible.

Ces emballages comprennent en général un contenant (ou réceptacle) et un opercule formant couvercle, qui sont fixés l'un à l'autre hermétiquement par soudage.

Le réceptacle, plus ou moins profond et relativement rigide, est constitué d'une feuille multicouche (dite également complexe ou composite) ayant une épaisseur minimale de 200 µm, en général comprise entre 200 et 1000 µm. Cette feuille est thermoformée de manière à présenter un fond plan sur lequel repose le produit alimentaire et un pourtour en forme de bande plane. Ce pourtour, généralement parallèle au fond, est lié par soudure à l'opercule, souple et plan, qui est constitué d'un film multicouche (qualifié également de complexe ou composite) d'épaisseur en général comprise entre 30 et 150 µm, et qui est désigné parfois par la dénomination de film d'operculage.

Lors de l'ouverture de l'emballage, le film d'operculage est séparé manuellement du réceptacle au niveau de la bande plane du pourtour. Cette opération laisse apparaître une couche adhésive au niveau de cette bande plane, tant sur la bande d'opercule que sur la bande de réceptacle qui étaient précédemment en contact. Ces 2 couches adhésives (continues ou discontinues) « dites filles » résultent de la rupture d'une couche adhésive initiale ou « mère » ou, éventuellement, de sa séparation (ou décollement) de l'une des 2 couches du film complexe multicouche qui lui sont adjacentes. Ladite couche adhésive initiale, désignée ci-après par couche A, est donc une des couches dudit film complexe multicouche qui est lui-même un élément compris soit dans la feuille composite qui constitue le réceptacle soit, de manière préférée, dans le film d'operculage.

Les 2 couches adhésives filles qui sont présentes, après ouverture de l'emballage, sur les bandes situées sur le pourtour respectif du réceptacle et de l'opercule sont donc en regard l'une de l'autre. Ainsi, il suffit de repositionner l'opercule sur le réceptacle, conformément à leur position dans l'emballage avant ouverture, afin de remettre en contact les 2 bandes de couches adhésives filles. Une simple pression manuelle permet alors d'obtenir la refermeture de l'emballage.

La composition adhésive qui constitue les couches adhésives mère et filles est donc nécessairement un adhésif sensible à la pression (également dénommé auto-adhésif ou encore PSA, de l'anglais « Pressure Sensitive Adhesive »).

Les compositions auto-adhésives décrites dans les demandes précitées sont des compositions thermofusibles comprenant une résine tackifiante et un copolymère bloc styrénique incluant un bloc élastomère. Les compositions auto-adhésives thermofusibles sont également dénommée couramment HMPSA, correspondant aux initiales de la traduction anglaise « Hot Melt Pressure Sensitive Adhesive ». Ce sont des substances solides à température ambiante qui ne contiennent ni eau ni solvant. Appliquées à l'état fondu, elles se solidifient lors de leur refroidissement, formant ainsi une couche adhésive qui assure la liaison entre les 2 couches minces de matériau polymérique thermoplastique à assembler, tout en offrant à l'emballage correspondant les propriétés avantageuses d'ouverture et de refermeture.

La facilité d'ouverture de tels emballages est étroitement liée aux propriétés du PSA et plus particulièrement à la force qu'il faut appliquer, lors de l'ouverture de l'emballage (ci-après dénommée première ouverture), pour obtenir la rupture de la couche adhésive mère et/ou sa séparation d'une des 2 couches qui lui sont adjacentes dans le film composite multicouche mentionné précédemment.

La capacité de l'emballage à se refermer et la qualité de la refermeture obtenue (ci-après dénommée première refermeture) sont également importantes pour disposer à nouveau d'un emballage substantiellement hermétique et donc apte à assurer la conservation de la denrée alimentaire qu'il contient. La qualité de la première refermeture est également étroitement liée aux propriétés du PSA. Elle est évaluée par la force qu'il faut appliquer, lors de la ré-ouverture (désignée ci-après par deuxième ouverture), pour obtenir à nouveau la rupture et/ou le décollement de la couche adhésive qui a été formée par le repositionnement des 2 couches adhésives filles, suivi par la pression manuelle appliquée sur le pourtour de l'emballage.

Le film complexe multicouche qui est compris soit dans la feuille composite qui constitue le réceptacle d'un emballage refermable, soit, de manière préférée, dans le film d'operculage, inclut généralement outre la couche A constituée par une composition auto-adhésive thermofusible (ou HMPSA) :
- une couche mince complexable B, et
- une couche mince thermoscellable et sécable C,
la couche A assurant la liaison entre les couches B et C.

Un tel film offre les propriétés d'ouverture et de refermeture désirées pour l'emballage.

La couche complexable B peut être complexée (ou contre-collée) avec d'autres couches pour la réalisation de l'emballage, par exemple avec une couche rigide pour améliorer la tenue mécanique dudit film, en vue de la fabrication du réceptacle.

La couche thermoscellable (terme synonyme de thermosoudable) et sécable C permet d'assurer :
- lors du conditionnement du produit alimentaire, la fermeture de l'emballage par thermosoudage du film d'operculage sur le réceptacle, au niveau de la bande plane du pourtour ; puis
- la première ouverture de l'emballage réalisée manuellement par le consommateur, et obtenue au moyen de la rupture de la zone sécable localisée à la surface de la couche C.

Le déroulement de cette première ouverture commence donc par la rupture de ladite zone sécable, puis se poursuit par la propagation de la rupture le long de la couche adhésive A, et ce jusqu'à la séparation complète de l'opercule du réceptacle. Cette propagation s'opère par rupture de la couche adhésive A dans sa masse (dite rupture cohésive) et/ou par rupture de l'interface de ladite couche A avec l'une et/ou l'autre des 2 couches adjacentes B ou C (dite rupture adhésive).

Le thermosoudage du film d'operculage sur le réceptacle s'effectue au moyen de barrettes (ou de mâchoires) par la mise en contact à chaud et sous pression des zones à assembler, résultant en un assemblage solide par interpénétration des matériaux constitutifs de la couche C du film et de la couche superficielle du pourtour du réceptacle.

Les couches B et C sont souvent constituées d'une polyoléfine telle que le polyéthylène (PE) ou le polypropylène (PP).

Les films multicouches de l'art antérieur pour emballage refermable qui viennent d'être décrits sont généralement fabriqués par un procédé de co-extrusion par soufflage de gaine.

Un tel procédé comprend :
- la fusion, dans des extrudeuses séparées, des compositions et matériaux constitutifs des couches A, B et C ; puis
- le passage des 3 flux correspondants à travers, respectivement, 3 filières annulaires et concentriques, comprises dans une tête d'extrusion, et cela de manière à former une bulle (ou gaine) tubulaire à 3 couches BAC, la couche A étant incluse entre les couches B et C.

La bulle ainsi formée est ensuite soumise à une expansion radiale (relativement à la filiaire annulaire) et à un étirement dans le sens axial avant d'être refroidie.

Dans un tel procédé de co-extrusion par soufflage de gaine, le risque que l'HMPSA constitutif de la couche A entre en contact direct avec les éléments du dispositif de co-extrusion est extrêmement limité, du fait de l'inclusion de ladite couche entre les couches B et C, et de la géométrie cylindrique de la gaine.

Par ailleurs, la co-extrusion à plat (dénommée en langue anglaise par "cast co-extrusion") est une technologie bien établie dans le domaine de la fabrication des films plastiques. Elle présente notamment deux avantages majeurs par rapport à un procédé de co-extrusion par soufflage de gaine.

Le premier est une productivité bien supérieure.

Le second est de produire un film plastique qui est susceptible de présenter de meilleures qualités optiques, et notamment une transparence améliorée. Cet avantage est lié à la possibilité qu'offre la co-extrusion à plat de refroidir plus rapidement le film, au moyen d'un rouleau refroidisseur situé au voisinage immédiat de la tête d'extrusion, alors que pour la co-extrusion par soufflage de gaine, le refroidissement est assuré par de l'air qui est soufflé à l'intérieur et à l'extérieur de la gaine, au sortir immédiat de la tête d'extrusion. Une transparence améliorée pour un film multicouche utilisé comme film d'operculage d'un emballage contenant une denrée alimentaire est très utile pour mieux suivre l'aspect de celle-ci durant sa phase de conservation, avant consommation.

Il est donc très souhaitable d'envisager la fabrication des films multicouches connus de l'art antérieur par co-extrusion à plat.

Toutefois, dans un tel procédé, le passage des flux correspondant aux compositions et matériaux constitutifs des couches A, B et C à co-extruder s'effectue au travers de filières rectangulaires, et cela de manière à former une nappe (ou rideau) à 3 couches BAC, la couche A étant incluse entre les couches B et C.

Ainsi, du fait de la géométrie rectangulaire des filières comprises dans la tête d'extrusion, la nappe sous la forme de laquelle est produite un tel film multicouche et dont l'épaisseur peut varier de 30 à 150 µm comprend nécessairement 2 bords, qui sont parallèles à la direction d'avancement du film dans le dispositif.

Or, la présence de ces 2 bords pose un sérieux problème.

En effet, et contrairement au procédé de co-extrusion par soufflage de gaine, il existe un risque que la composition auto-adhésive thermofusible (ou HMPSA) constitutive de la couche A soit exsudée du film multicouche au niveau des bords, ce qui aurait pour effet de rendre ces derniers collants, en raison de la forte pégosité (ou "tack") de ladite composition liée notamment à la présence dans celle-ci d'une résine tackifiante. La présence de tels bords collants, susceptibles de venir en contact avec des éléments du dispositif de mise en oeuvre du procédé peut perturber le bon déroulement de ce dernier, allant jusqu'à entraîner l'arrêt de l'installation.

La présente invention a pour but d'éviter un tel risque.

Un autre but de la présente invention est de proposer un film multicouche pour emballage refermable présentant :
- une force de 1^{ère} ouverture qui soit adaptée à une ouverture facile de l'emballage par le consommateur, et
- une force de 2^{ème} ouverture qui assure, après la 1^{ère} refermeture de l'emballage par le consommateur, une refermeture substantiellement hermétique.

Un autre but de la présente invention est de proposer un film multicouche dont la fabrication par un procédé de co-extrusion à plat ne donne pas lieu, durant la mise en oeuvre dudit procédé, à la présence de bords collants, ou dont le risque de la présence de tels bords collants soit diminué.

Un autre but de la présente invention est de proposer un film multicouche susceptible d'être fabriqué par un procédé de co-extrusion à plat et qui présente une homogénéité améliorée, notamment en ce qui concerne son aspect et son épaisseur.

Un autre but de la présente invention est de proposer un film multicouche qui présente une transparence améliorée.

Un autre but de la présente invention est de proposer un film multicouche qui peut être fabriqué par un procédé industriel dont la productivité est plus élevée.

Il a à présent été trouvé que ces buts peuvent être obtenus, en totalité ou en partie, au moyen du film multicouche selon l'invention qui est décrit ci-après.

La présente invention a donc pour objet en premier lieu un film multicouche comprenant :
- une couche adhésive A constituée par une composition HMPSA extrudable (a) ;
- une couche mince complexable B constituée d'une composition (b) d'un PolyEthylène (PE) noté PE(b) ; et
- une couche thermoscellable et sécable C constituée d'une composition (c) d'un PolyEthylène (PE) noté PE(c) ;
les couches B et C étant liées entre elles par la couche A et ledit film étant caractérisé en ce que :
(i) les indices d'écoulement des compositions (b) et (c), mesurés en g/10 minutes pour une température de 190°C et un poids total de 2,16 kg, et notés respectivement MFI(b) et MFI(c), sont chacun compris entre 2,5 et 15 g/10 minutes; et
(ii) l'indice d'écoulement de la composition HMPSA (a), mesuré en g/10 minutes pour une température de 190°C et un poids total de 2,16 kg, et noté MFI(a), est tel que les rapports MFI(a)/MFI(b) et MFI(a)/MFI(c) sont chacun compris entre 1,5 et 10.

Les couches B et C sont liées entre elles par la couche A. Le tricouche correspondant est représenté par la notation B/A/C, dans laquelle le signe «/» signifie que les faces des couches concernées sont en contact direct.

L'indice d'écoulement (ou Melt Flow Index MFI) est mesuré, tant pour chacune des compositions (b) et (c) constitutives, respectivement, des couches B et C que pour la composition HMPSA (a) constitutive de la couche A, dans les mêmes conditions : soit à 190°C et pour un poids total de 2,16 kg, conformément à la condition d) de la norme ISO 1133. Le MFI est la masse de composition (préalablement placée dans un cylindre vertical et exprimée en gramme) qui s'écoule en 10 minutes au travers d'une filière de diamètre fixé, sous l'effet d'une pression exercée par un piston chargé ayant le poids total de 2,16 kg. En l'absence de mention contraire, les valeurs de MFI indiquées dans le présent texte ont été mesurées et exprimées dans ces mêmes conditions.

Il a été trouvé, par des essais conduits par le déposant, que la satisfaction des conditions (i) et (ii) par les MFI de l'HMPSA constitutif de la couche A et des compositions constitutives des couches B et C permet, lors de la fabrication du film tricouche ABC par co-extrusion à plat, d'éviter la présence de bords collants dans la nappe produite à la sortie de la tête d'extrusion. Le film tricouche ainsi obtenu présente une épaisseur uniforme, et une homogénéité d'aspect le rendant apte à une utilisation pour l'emballage, notamment pour l'emballage de denrées alimentaires. Enfin, ledit film tricouche présente des valeurs de force de 1^{ère} ouverture et de force de 2^{ème} ouverture qui conviennent à son utilisation pour la fabrication d'emballages refermables.

Selon une variante préférée du film multicouche objet de l'invention, les indices d'écoulement MFI(b) et MFI(c) sont chacun compris entre 3 et 10 g/10 minutes, et les rapports MFI(a)/MFI(b) et MFI(a)/MFI(c) sont chacun compris entre 2 et 9.

Selon une variante encore plus préférée, les indices d'écoulement MFI(b) et MFI(c) sont chacun compris entre 3,5 et 8 g/10 minutes, et les rapports MFI(a)/MFI(b) et MFI(a)/MFI(c) sont chacun compris entre 2,2 et 8.

Selon un mode de réalisation de l'invention, l'indice d'écoulement de la composition HMPSA (a), soit MFI(a), est compris dans un domaine allant de 4 à 100 g/10 minutes, de préférence de 4 à 70, de manière davantage préférée de 5 à 50, et de manière encore plus préférée de 10 à 30.

### Composition HMPSA extrudable (a) constitutive de la couche adhésive A :

La composition HMPSA (ou auto-adhésive thermofusible) extrudable (a) comprend, sur la base du poids total de ladite composition :
- de 40 à 70 % en poids d'une composition (a1) de copolymères blocs styréniques comprenant au moins un bloc élastomère, ladite composition (a1) étant constituée, sur la base de son poids total :
   - de 10 à 90 % en poids d'au moins un copolymère dibloc choisi dans le groupe comprenant les SI, SBI, SIB, SB, SEB, et SEP, et
   - de 10 à 90 % en poids d'au moins un copolymère tribloc choisi dans le groupe comprenant les SIS, SIBS, SBS, SEBS et SEPS ;
      la teneur en motifs styréniques totale de ladite composition (a1) variant de 10 à 40 % en poids sur la base du poids total de (a1) ; et
- de 30 à 60 % en poids d'une ou plusieurs résines tackifiantes (a2).

### Composition (a1) de copolymères blocs styréniques comprenant au moins un bloc élastomère :

Les copolymères blocs styréniques mis en oeuvre dans la composition (a1) ont une masse molaire moyenne en poids Mw généralement comprise entre 50 kDa et 500 kDa.

Ces copolymères blocs styréniques sont constitués de blocs de différents monomères polymérisés incluant au moins un bloc polystyrène, et sont préparés par des techniques de polymérisation radicalaire.

En l'absence d'indication contraire, les masses molaires moyennes en poids M_{w} qui sont données dans le présent texte sont exprimées en dalton (Da) et sont déterminées par Chromatographie par Perméation de Gel, la colonne étant calibrée avec des étalons de polystyrène.

Les copolymères tribloc incluent 2 blocs polystyrène et un bloc élastomère. Ils peuvent revêtir des structures diverses : linéaire, en étoile (également dénommée radiale), branchée ou encore en peigne. Les copolymères dibloc incluent 1 bloc polystyrène et 1 bloc élastomère.

Les copolymères tri-bloc ont pour formule générale :

ABA (I)

dans laquelle :
- A représente un bloc non élastomère styrénique (ou polystyrène), et
- B représente un bloc élastomère qui peut être :
   - le polyisoprène. Le copolymère bloc a alors pour structure : polystyrène-polyisoprène-polystyrène, et pour dénomination : SIS ;
   - le polyisoprène suivi d'un bloc polybutadiène. Le copolymère bloc a alors pour structure : polystyrène-polyisoprène-polybutadiène-polystyrène, et pour dénomination : SIBS
   - le polybutadiène. Le copolymère bloc a alors pour structure : polystyrène- polybutadiène- polystyrène, et pour dénomination : SBS ;
   - le polybutadiène hydrogéné totalement ou en partie. Le copolymère bloc a alors pour structure: polystyrène-poly(éthylènebutylène)- polystyrène et pour dénomination : SEBS ;
   - le polyisoprène hydrogéné totalement ou en partie. Le copolymère bloc a alors pour structure : polystyrène-poly(éthylènepropylène)- polystyrène et pour dénomination : SEPS.

Les copolymères di-bloc ont pour formule générale :

A-B (II)

dans laquelle A et B sont tels que définis précédemment.

Lorsque la composition (a1) comprend plusieurs copolymères styréniques triblocs, ces derniers étant choisis dans le groupe comprenant les SIS, les SBS, les SEPS, les SIBS, les SEBS, il est bien entendu que lesdits triblocs peuvent appartenir à une seule ou à plusieurs de ces 5 familles de copolymères. Il en est de même, *mutatis mutandis,* pour les copolymères diblocs.

On préfère utiliser une composition (a1) comprenant un copolymère tribloc et un copolymère dibloc ayant le même bloc élastomère, en raison notamment du fait que de tels mélanges sont disponibles commercialement.

Selon une variante de réalisation particulièrement préférée, la teneur en copolymère dibloc dans la composition (a1) peut varier de 15 à 80 %, de préférence de 50 à 80 %.

Selon un mode de réalisation particulièrement avantageux de la composition (a) constitutive de la couche A comprise dans le film multicouche selon l'invention, la composition (a1) est constituée d'un copolymère tribloc SIS et d'un copolymère dibloc SI. Dans ce cas la teneur en motifs styréniques totale de la composition (a1) varie de préférence de 10 à 25 %.

Les copolymères triblocs compris dans la composition (a1) ont de préférence une structure linéaire.

Les copolymères blocs styréniques à bloc élastomère, notamment de type SI et SIS, utilisables dans la composition (a) sont disponibles commercialement, souvent sous la forme de mélanges tribloc/dibloc.

Le Kraton^{®} D1111 de la société Kraton, le Quintac^{®} 3520 et le Quintac^{®} 3433 N de la société Zeon Chemicals sont des exemples de compositions (a1) constituées de SIS et SI.

Le Kraton^{®} D1111 est une composition dont la teneur en motifs styréniques globale est de 22 %, et qui est constituée de 82 % de copolymère tribloc SIS linéaire de M_{w} environ 250 kDa, et de 18 % de copolymère dibloc SI de M_{w} environ 100 kDa.

Le Quintac^{®} 3520 est une composition qui est constituée, respectivement, de 22 % et de 78 % de tribloc SIS linéaire (M_{w} environ 300 kDa) et de dibloc SI (M_{w} environ 130 kDa), et dont la teneur totale en motifs styréniques est de 15 %.

Le Quintac^{®} 3433 N est une composition qui est constituée, respectivement, de 44 % et de 56 % de tribloc SIS linéaire (M_{w} environ 220 kDa) et de dibloc SI (M_{w} environ 110 kDa), et dont la teneur totale en motifs styréniques est de 16,5 %.

### Résines tackifiantes (a2) :

La composition HMPSA (a) constitutive de la couche A comprend également une ou plusieurs résines tackifiantes (a2).

La ou les résines tackifiantes (a2) utilisables ont des masses molaires moyennes en poids M_{w} généralement comprises entre 300 et 5000 Da et sont choisies notamment parmi :
- (i) les colophanes d'origine naturelle ou modifiées, telles que par exemple la colophane extraite de la gomme de pins, la colophane de bois extraite des racines de l'arbre et leurs dérivés hydrogénés, deshydrogénés, dimérisés, polymérisés ou estérifiés par des monoalcools ou des polyols comme le glycérol ;
- (ii) des résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (iii) des résines terpéniques résultant généralement de la polymérisation d'hydrocarbures terpéniques comme par exemple le mono-terpène (ou pinène) en présence de catalyseurs de Friedel-Crafts, éventuellement modifiées par action de phénols ;
- (iv) des copolymères à base de terpènes naturels, par exemple le styrène/terpène, l'alpha-méthyl styrène/terpène et le vinyl toluène/terpène.

Selon une variante préférée, la température (ou point) de ramollissement des résines tackifiantes utilisables dans la composition selon l'invention peut varier de 5 à 140 °C. La température de ramollissement est déterminée conformément au test normalisé ASTM E 28 dont le principe est le suivant. Un anneau en laiton de diamètre environ 2 cm est rempli de la résine à tester à l'état fondu. Après refroidissement à température ambiante, l'anneau et la résine solide sont placés horizontalement dans un bain de glycérine thermostaté dont la température peut varier de 5° C par minute. Une bille d'acier de diamètre environ 9,5 mm est centrée sur le disque de résine solide. La température de ramollissement est -durant la phase de montée en température du bain à raison de 5°C par minute- la température à laquelle le disque de résine flue d'une hauteur de 25,4 mm sous le poids de la bille.

Selon une variante préférée, on utilise des résines aliphatiques appartenant aux catégories (ii) ou (iii) pour lesquelles on peut citer comme exemples de résine disponible commercialement :
(ii) l'Escorez^{®} 1310 LC disponible auprès de Exxon Chemicals, qui est une résine obtenue par polymérisation d'un mélange d'hydrocarbures aliphatiques insaturés ayant environ 5 atomes de carbone, et qui possède une température de ramolissement de 94°C et une masse molaire moyenne en poids Mw d'environ 1800 Da ; l' Escorez^{®} 5400 également disponible auprès de Exxon Chemicals, qui est une résine obtenue par polymérisation, puis hydrogénation d'un mélange d'hydrocarbures aliphatiques insaturés ayant environ 9 ou 10 atomes de carbone et qui possède une température de ramolissement de 100°C et un Mw d'environ 570 Da ; la Regalite^{®} R1125 disponible auprès de Eastman, qui est une résine hydrogénée qui possède une température de ramolissement de 123°C et une masse molaire moyenne en poids Mw d'environ 1200 Da.
(iii) la Dercolyte^{®} S115 disponible auprès de la société « Dérivés Résiniques et Terpéniques ou DRT) qui une résine terpène ayant une température de ramollissement de 115°C et un Mw d'environ 2300 Da.

Selon une variante préférée, la composition HMPSA (a) constitutive de la couche A est constituée essentiellement :
- de 40 à 70 % de la composition (a1) de copolymères blocs styréniques ; et
- de 30 à 60 % d'au moins une résine tackifiante (a2) ayant une température de ramollissement comprise entre 5 et 140 °C.

Selon une autre variante préférée, la composition HMPSA (a) constitutive de la couche A comprend ou est constituée essentiellement :
- de 50 à 70 % de la composition (a1) de copolymères blocs styréniques ; et
- de 30 à 50 % d'au moins une résine tackifiante (a2) ayant une température de ramollissement comprise entre 5 et 140 °C.

Selon encore une autre variante préférée, la composition HMPSA (a) constitutive de la couche A peut également comprendre, outre la composition (a1) et la (ou les) résines tackifiantes (a2), de 0,1 à 2 % d'un ou plusieurs stabilisants (ou anti-oxydant). Ces composés sont introduits pour protéger la composition d'une dégradation résultant d'une réaction avec de l'oxygène qui est susceptible de se former par action de la chaleur, de la lumière ou de catalyseurs résiduels sur certaines matières premières telles que les résines tackifiantes. Ces composés peuvent inclure des anti-oxydants primaires qui piègent les radicaux libres et sont généralement des phénols substitués comme l'Irganox^{®} 1010 de CIBA. Les anti-oxydants primaires peuvent être utilisés seuls ou en combinaison avec d'autres anti-oxydants tels que des phosphites comme l'Irgafos^{®} 168 également de CIBA, ou encore avec des stabilisants UV tels que des amines.

La composition (a) peut également comprendre un plastifiant, mais dans une quantité ne dépassant pas 5 %. On peut utiliser comme plastifiant une huile paraffinique et naphténique (comme le Primol^{®} 352 de la société ESSO) comprenant éventuellement des composés aromatiques (comme le Nyflex 222B).

La composition (a) peut enfin comprendre des charges minérales ou organiques, des pigments ou des colorants.

En vue de sa mise en oeuvre, la composition (a) se présente avantageusement sous la forme de granulés de taille comprise entre 1 et 10 mm, de préférence entre 2 et 5 mm. Elle peut être préparée, sous cette forme de granulés, par simple mélange de ses ingrédients à chaud, entre 150 et 200°C, de préférence à environ 160°C, au moyen d'une extrudeuse à 2 vis muni d'un outil de découpe du produit extrudé en sortie de la filière.

### Compositions de polyéthylène (b) et (c) constitutives des couches B et C :

La couche mince complexable B et la couche thermoscellable et sécable C sont, respectivement, constituées d'une composition (b) d'un PolyEthylène PE(b) et d'une composition (c) d'un PolyEthylène PE(c).

Les PolyEthylènes PE(b) et PE(c) peuvent être identiques ou différents.

Selon un mode de réalisation préféré, les compositions (b) et (c) sont des compositions d'un même PolyEthylène PE.

Les PE(b) et PE(c), identiques ou différents, qui sont, respectivement, compris dans les compositions (b) et (c), sont un homopolymère (ou un copolymère) de polyéthylène qui peut inclure :
- un polyéthylène linéaire tel que le HDPE (High Density PolyEthylene),
- un polyéthylène linéaire de basse densité (LDPE),
- un polyéthylène linéaire de très basse ou ultrabasse densité (VLDPE ou ULDPE),

De tels polyéthylènes peuvent être préparés par plusieurs méthodes, incluant la polymérisation en présence d'un catalyseur de Ziegler-Natta, la polymérisation catalysée par un métallocène, la polymérisation radicalaire. Parmi les PE obtenus par catalyse métallocène, on peut notamment citer les produits de la gamme Lumicene^{®} de Total.

De préférence, le PE mis en oeuvre est un PE basse densité (également désigné par l'appellation anglaise de Low Density PolyEthylène ou LDPE) obtenu selon un procédé à haute pression.

Des grades de tels PE basse densité sont disponibles commercialement pour différentes valeurs de MFI. On peut ainsi citer :
- le Polyéthylène LDPE LD0304 dont le MFI est de 4 g/10 minutes,
- le Polyéthylène LDPE LA0710 dont le MFI est de 7,5 g/10 minutes ;
ces 2 grades étant tous deux disponibles auprès de la société TOTAL.

Selon un mode de réalisation, les compositions (b) et (c) sont constituées d'un PE, identique ou différent, de préférence identique.

Selon un autre mode de réalisation, les compositions (b) et (c) sont des compositions à base de PE qui comprennent, outre ledit PE, un additif choisi parmi un agent anti-buée, un agent d'aide au procédé, un agent glissant et/ou un agent anti-bloquant. Selon une variante encore plus préférée, les compositions (b) et (c) sont, chacune, constituées de PE et d'une quantité dudit additif allant jusqu'à 5% en poids, sur la base du poids total de la composition, de manière encore plus préférée jusqu'à 3 %.

Il est fréquent d'observer dans le cas d'un emballage constitué d'un matériau thermoplastique transparent et contenant une denrée alimentaire, notamment un produit frais dont la teneur en humidité peut être très élevée, la présence sur la paroi extérieure transparente de l'emballage d'une buée provenant de la condensation de l'eau qui s'est évaporée du produit emballé. La formation de cette buée ou brouillard (désigné également en anglais par le terme "fogging") a pour effet de masquer au consommateur l'article emballé qu'il s'agisse de viande, de fleurs ou de légumes, réduisant ainsi l'attractivité de l'article emballé et la possibilité, dans le cas d'une denrée alimentaire, de s'assurer, par simple observation visuelle, de sa qualité en vue de sa consommation. La mise en oeuvre d'un agent antibuée prévient cet inconvénient. Un tensio-actif non ionique est généralement utilisé à cette fin. En effet, un tel agent (désigné également par l'appellation anglaise de "anti-fog") entraîne, à la surface de la couche de matériau thermoplastique dans lequel il a été intégré, l'étalement des gouttelettes d'eau formant la buée opaque, de manière à former un film d'eau invisible, qui n'altère pas la transparence de la couche extérieure du matériau thermoplastique.

L'incorporation d'un agent d'aide au procédé (dénommé également en anglais "processing aid") permet de réduire les phénomènes indésirables de friction dans l'extrudeuse. La diminution de la friction s'accompagne d'une diminution de la pression d'extrusion, qui permet ainsi d'augmenter la cadence de la production industrielle. De tels agents sont généralement des (co)polymères fluorés thermoplastiques.

Un agent glissant est souvent utilisé pour améliorer, via la réduction du coefficient de friction, le défilement (ou glissant) du film à grande vitesse sur les rouleaux et autres surfaces métalliques des lignes industrielles, avec lesquels ledit film est en contact. On peut citer en particulier le recours à cette fin à des amides d'acides gras.

Un agent anti-bloquant (appelé également en anglais "antiblock additive") permet d'éviter ou de limiter l'adhésion (ou blocage) du film sur lui-même qui est susceptible d'apparaître lors de l'enroulement / déroulement du film en rouleau dans des conditions de production industrielles, sous l'effet également des forces de friction. Sont utilisés à cette fin :
- des composés minéraux tels que : la terre de diatomées, la silice naturelle ou synthétique, du carbonate de calcium, du talc, des silicates d'aluminium et/ou de potassium ; ou
- des composés organiques tels que des amides d'acides gras, tels que des stéarates.

Les quantités d'agents antibuée, d'agent glissant et d'agent anti-bloquant dans les compositions (b) et (c) peuvent varier de 0,1 à 5 % en poids, de préférence de 0,5 à 3 %, sur la base du poids total de la composition correspondante. La quantité d'agent d'aide au procédé dans les compositions (b) et (c) peut, quant à elle, varier de 0,01 à 0,5 % en poids, de préférence de 0,02 à 0,2 %, sur la base du poids total de la composition correspondante.

Les compositions (b) et (c) sont :
- soit disponibles commercialement sous la forme de granulés, par exemple lorsqu'elles sont constituées de PE ;
- soit peuvent être facilement mises industriellement sous la forme de tels granulés, lorsqu'elles comprennent outre le PE des additifs, tels ceux listés précédemment.

La taille de ces granulés peut être comprise entre 1 et 10 mm, de préférence entre 2 et 5 mm.

### Film multicouche :

Le film multicouche objet de l'invention comprend la couche adhésive A, la couche mince complexable B et la couche thermoscellable et sécable C, telles que définies précédemment.

Selon un mode de réalisation, le film multicouche objet de l'invention est constitué de ces 3 couches A, B et C.

Selon un autre mode de réalisation, le film multicouche objet de l'invention comprend, outre les 3 couches A, B et C, des couches minces additionnelles, nécessaires à la réalisation de l'emballage. On peut citer, à titre d'exemple :
- une couche rigide, nécessaire à la tenue mécanique du réceptacle, ou
- une couche imprimable, ou encore
- une couche à effet barrière contre l'oxygène, la vapeur d'eau ou bien le monoxyde de carbone.

Les matériaux constitutifs de ces couches peuvent être choisis parmi :
- le polyéthylène (PE),
- le polypropylène (PP),
- un copolymère à base d'éthylène et de propylène,
- le polyamide (PA),
- le polyéthylènetéréphtalate (PET), ou encore
- un copolymère à base d'éthylène comme par exemple un copolymère greffé anhydride maléïque, un copolymère d'éthylène et d'acétate de vinyle (EVA), un copolymère d'éthylène et d'alcool vinylique (EVOH), un copolymère d'éthylène et d'un acrylate d'alkyle tel que l'acrylate de méthyle (EMA) ou de butyle (EBA),
- le polystyrène (PS),
- le polychlorure de vinyle (PVC),
- un polymère d'acide lactique (PLA), ou
- un polyhydroxyalkanoate (PHA).

Parmi les polymères thermoplastiques listés ci-dessus, on préfère pour les couches additionnelles aux couches A, B et C, les polymères suivants : PE, PP, copolymère PE-PP, PA, PET, EVA, EVOH, EMA ou EBA.

L'épaisseur totale du film multicouche selon l'invention varie dans un domaine allant de 20 à 300 µm, un domaine de 30 à 150 µm étant davantage préféré, et un domaine de 40 à 80 µm étant encore plus préféré.

L'épaisseur de la couche adhésive A quant à elle varie de préférence dans un domaine allant de 5 à 50 µm, un domaine de 7 à 25 µm étant davantage préféré, et un domaine de 10 à 20 µm étant encore plus préféré.

Enfin, l'épaisseur de la couche thermoscellable et sécable C varie également de préférence dans un domaine allant de 5 à 25 µm, et, de manière encore plus préférée, de 10 à 17 µm.

La présente invention concerne également un procédé de fabrication du film multicouche tel que défini précédemment, caractérisé en ce qu'il comprend la co-extrusion à plat de la composition HMPSA (a) constitutive de la couche A et des compositions (b) et (c) constitutives des couches B et C, à une température comprise entre 150°C et 250°C.

Selon une variante préférée, la co-extrusion à plat comprend les étapes séquentielles :
(i) d'introduction, dans 3 extrudeuses séparées, des compositions (a), (b) et (c) constitutives, respectivement, des couches A, B et C sous la forme de granulés de taille comprise entre 1 et 10 mm, de préférence entre 2 et 5 mm,
(ii) de transformation par chauffage desdits granulés à l'état de liquide visqueux,
(iii) de passage des flux correspondants à travers une tête d'extrusion monobloc comprenant un ensemble de filières rectangulaires portées chacune à une température inférieure à 250°C, de manière à former une nappe (ou rideau) à 3 couches B/A/C, la couche A étant incluse entre les couches B et C,
(iv) d'expansion de la nappe dans la direction d'avancement de la machine (appelée également "sens machine"), puis
(v) de refroidissement de ladite nappe.

Le refroidissement de la nappe peut être assuré au moyen d'un rouleau refroidisseur placé au voisinage de la tête d'extrusion, éventuellement en présence d'une boîte à vide et d'un couteau à air, destinés à mieux plaquer ladite nappe sur le rouleau refroidisseur.

Les caractéristiques géométriques des filières, de même que les paramètres du procédé tels que la vitesse d'enroulement de la nappe sur le rouleau refroidisseur (ou "lift-off roll" en anglais), sont fixés de manière à obtenir l'épaisseur désirée pour les différentes couches constitutives du film multicouche.

Les couches additionnelles qui sont éventuellement comprises dans le film multicouche selon l'invention peuvent être obtenues :
- soit par l'incorporation dans le dispositif de co-extrusion à plat des matériaux constitutifs correspondants sous la forme de granulés ;
- soit par un procédé de complexage du film directement issu de ladite co-extrusion, mettant en oeuvre par exemple un adhésif à base de polyuréthane. Cette dernière variante peut notamment être appliquée à l'introduction d'une couche rigide, nécessaire à la tenue mécanique du réceptacle.

La présente invention concerne encore l'utilisation du film multicouche tel que décrit précédemment pour la fabrication d'emballages refermables.

L'utilisation pour la fabrication de barquettes refermables est particulièrement avantageuse, et selon un mode de réalisation particulièrement préféré pour la fabrication du film d'operculage de ces barquettes.

Les exemples suivants sont donnés à titre purement illustratif de l'invention, et ne sauraient en aucun cas être interprétés pour en limiter la portée.

### Exemples A1, A2 et A3 (références) : compositions (a) de la couche A

Chacune des compositions A1, A2 et A3 est préparée préalablement sous la forme de granulés d'environ 4 mm de diamètre, par simple mélange des ingrédients listés dans le Tableau 1, au moyen d'une extrudeuse à 2 vis.

Le MFI mesuré est également indiqué dans le tableau 1.

### Exemple 1 (selon l'invention) : film tricouche B/A/C avec couche A ayant pour composition A1 et couches B et C en LDPE de MFI égal à 4 g/10 min :

Ce film tricouche est fabriqué au moyen d'un dispositif pilote de co-extrusion à plat fonctionnant en continu, dans lequel 3 extrudeuses à vis sont alimentées :
- pour l'une, par la composition A1 de l'exemple A1, et
- pour les 2 autres, par le LDPE LD0304 de la société TOTAL ;
les 3 compositions étant sous la forme de granulés de taille d'environ 4 mm.

Ce dispositif pilote comprend une tête d'extrusion monobloc munie d'une filière rectangulaire de largeur 250 mm et de 300 µm de hauteur, et un rouleau refroidisseur chromé refroidi par un système de circulation d'eau interne.

Les paramètres du procédé sont ajustés de manière à fabriquer un film tricouche constitué :
- en tant que couche A, d'une couche d'épaisseur 15 µm constituée de la composition A1,
- en tant que couche mince complexable B, d'une couche d'épaisseur 30 µm constituée dudit LDPE ;
- en tant que couche mince thermoscellable et sécable C, d'une couche d'épaisseur 15 µm constituée également dudit LDPE.

Parmi les paramètres usuellement fixés, on peut citer une température de 200°C pour la tête d'extrusion monobloc et la filière rectangulaire, et une vitesse de ligne de 10 m par minute.

Le film tricouche ainsi obtenu a une épaisseur totale de 60 µm, une longueur de 50 m et est conditionné sous la forme d'une bobine de 250 mm de laize. La composition de la couche A est indiquée dans le Tableau 2, de même que le grade de LDPE mis en oeuvre pour les couches B et C.

Un contrôle est effectué sur l'aspect du film tricouche ainsi obtenu, incluant l'homogénéité de son épaisseur. On constate ainsi l'absence de bords collants et l'absence de "vagues de co-extrusion" indiquant une conformité du film obtenu. Une telle conformité est reportée dans le Tableau 2 par la mention "OK".

On entend désigner par "vagues de co-extrusion" la présence possible sur un film tricouche obtenu par co-extrusion à plat de traits (ou vagues) qui correspondent à une surépaisseur, et indiquent une inhomogénéité d'épaisseur dudit film qui n'est pas acceptable.

Après constatation de sa conformité, le film tricouche est soumis aux tests B.1. et B.2. décrits ci-après.

### Test B.1. : Mesure de la force de première ouverture par pelage en T à 23°C du film tricouche préalablement thermosoudé sur un complexe PET/PE :

On découpe dans le film tricouche B/A/C obtenu précédemment des éprouvettes rectangulaires E1 de 25 cm de longueur et 3 cm de largeur.

On utilise, par ailleurs, un film complexe PET/PE constitué d'une couche de PET d'épaisseur 23 µm qui est contrecollée par du polyuréthane (couche de 2 µm) sur une couche de PE de 50 µm d'épaisseur. On découpe dans ce film complexe des éprouvettes rectangulaires E2 de 25 cm de longueur et 3 cm de largeur.

Une éprouvette E1 est alors placée en regard entre 2 éprouvettes E2, les 3 éprouvettes étant superposées, de manière à ce que les couches B et C de E1 soit en contact avec la couche de PE de E2.

On procède alors à un scellage partiel, au moyen de deux mâchoires chauffantes à 130°C, appliquées sous une pression de 4,6 bar pendant 1 seconde, de manière à obtenir une zone scellée de forme rectangulaire (15 cm de longueur et 1 cm de largeur). Ladite zone scellée est disposée dans le sens de la longueur et se trouve au centre de l'assemblage des 3 éprouvettes superposées, de sorte que 5cm de films non scellés dépassent de part et d'autre dans le sens de la longueur, et 1cm de films non scellés dépassent de part et d'autre dans le sens de la largeur.

Les bandes de films libres situées d'un même côté de l'assemblage des 3 éprouvettes, par rapport à la zone scellée, sont fixées :
- à un premier dispositif d'attache (appelé mors) qui est relié à la partie fixe d'un appareil de traction, pour ce qui est de celle des 2 bandes E2 qui est face à la couche C de E1, et
- à un second mors relié à la partie mobile dudit appareil de traction, pour ce qui est de l'autre bande E2 et de la bande E1.

Les parties fixe et mobile de l'appareil de traction, qui est un dynamomètre, sont situées sur un même axe vertical.

Les 3 bandes ainsi fixées, permettent, par déplacement des mors du dynamomètre, de solliciter (ou peler) l'interface entre la couche C du film B/A/C constitutif de E1 et le PE de E2 qui lui fait face.

Alors qu'un mécanisme d'entraînement communique à la partie mobile une vitesse uniforme de 300 mm/minute conduisant au pelage des 3 éprouvettes E1 et E2 scellées, les extrémités se déplacent progressivement selon un axe vertical en formant un angle de 180°. Un capteur de force relié à ladite partie mobile mesure la force supportée par l'éprouvette ainsi maintenue. La mesure est réalisée dans une salle climatique maintenue à une température de 23°C.

La force obtenue est indiquée dans le Tableau 2.

### Test B.2. Mesure de la force de deuxième ouverture par pelage en T à 23°C du film tricouche thermosoudé sur un complexe PET/PE :

Les 2 parties de l'éprouvette précédente sont, après pelage, repositionnées en regard l'une de l'autre et mises en contact manuellement. Elles sont alors soumises à une pression exercée au moyen d'un rouleau de masse 2 kg avec lequel on procède à un mouvement d'aller-retour selon une direction parallèle à la longueur de l'éprouvette.

On obtient ainsi une éprouvette de traction de forme identique à celle préparée pour le test de pelage précédent qui est alors répété.

La force obtenue est indiquée dans le Tableau 2.

### Exemples 2 à 5 (selon l'invention) : films tricouche B/A/C

Pour chacun de ces exemples, l'exemple 1 est répété :
- en remplaçant éventuellement la composition A1 de la couche A par la composition A2 ou A3 (dont le détail est donné dans le Tableau 1), comme indiqué dans le Tableau 2 ; et
- en remplaçant éventuellement le LDPE LD0304 des couches B et C par le LDPE LA0710, comme indiqué dans le Tableau 2.

L'aspect du film tricouche obtenu est identique à celui du film tricouche de l'exemple 1 et est noté OK dans le Tableau 2.

### Exemple 6 (comparatif) : film tricouche B/A/C avec couche A de composition A3 et couches B et C en LDPE de MFI égal à 7,5 g/10 min

On répète l'exemple 1, en remplaçant :
- la composition A1 de la couche A par la composition A3, et
- le LDPE LD0304 des couches B et C par le LDPE LA0710,
comme indiqué dans le Tableau 3.

On observe sur le film tricouche obtenu des vagues de co-extrusion, qui ont pour effet de rendre ledit film non conforme.

### Exemples 7 à 9 (comparatifs) : films tricouche B/A/C avec couches B et C en LDPE de MFI égal à 2,3 g/10 min

On répète l'exemple 1 :
- en remplaçant éventuellement la composition A1 de la couche A par la composition A2 ou A3, comme indiqué dans le Tableau 3 ; et
- en remplaçant le LDPE LD0304 des couches B et C par le LDPE 1022FN24, également comme indiqué dans le Tableau 3.

Le LDPE 1022FN24 est un polyéthylène basse densité dont le MFI est de 2,3 g/10 minutes. Il est disponible auprès de la société TOTAL, et se présente sous la forme de granulés de taille comprise entre 1 et 10 mm, de préférence entre 2 et 5 mm.

On observe sur le film tricouche obtenu des bords collants et/ou des vagues de co-extrusion, qui ont pour effet de rendre ledit film non conforme.

**Tableau 1 - Composition (a) de la couche A**

| Ingrédient | Teneur en % poids/poids | | |
|---|---|---|---|
| | Ex. A1 (référence) | Ex. A2 (référence) | Ex. A3 (référence) |
| Quintac^{®} 3433 N | 59,7 | - | - |
| Quintac^{®} 3520 | - | 59,7 | - |
| Kraton^{®} D1111 | - | - | 59,7 |
| Escorez^{®} 1310 LC | 39,8 | - | - |
| Regalite^{®} R1125 | - | 39,8 | 39,8 |
| Anti-oxydant | 0,5 | 0,5 | 0,5 |
| MFI (en g/10 minutes) | 30 | 25 | 10 |

**Tableau 2 - Films tricouches B/A/C selon l'invention**

| | | **Ex. 1** | **Ex. 2** | **Ex. 3** | **Ex. 4** | **Ex. 5** |
|---|---|---|---|---|---|---|
| Couche A | Composition (a) | A1 | A2 | A3 | A1 | A2 |
| | MFI₍ₐ₎ (en g/10 minutes) | 30 | 25 | 10 | 30 | 25 |
| Couches B et C | Grade LDPE | LD0304 | LD0304 | LD0304 | LA0710 | LA0710 |
| | MFI_{(PE)} (en g/10 minutes) | 4 | 4 | 4 | 7,5 | 7,5 |
| Film tricouche B/A/C | MFI₍ₐ₎/MFI_{(PE)} | 7,5 | 6,2 | 2,5 | 4 | 3,3 |
| | Aspect du film | OK | OK | OK | OK | OK |
| | Force de 1ère ouverture (N/cm) | 4,14 | 6,63 | 5,59 | 4,53 | 6,09 |
| | Force de 2ème ouverture (N/cm) | 0,66 | 2,02 | 0,72 | 0,68 | 0,98 |

**Tableau 3 - Films tricouches B/A/C comparatifs**

| | | **Ex. 6 (comp)** | **Ex. 7 (comp)** | **Ex. 8 (comp)** | **Ex. 9 (comp)** |
|---|---|---|---|---|---|
| Couche A | Composition (a) | A3 | A1 | A2 | A3 |
| | MFI₍ₐ₎ (en g/10 minutes) | 10 | 30 | 25 | 10 |
| Couches B et C | Grade LDPE | LA0710 | 1022FN24 | 1022FN24 | 1022FN24 |
| | MFI_{(PE)} (en g/10 minutes) | 7,5 | 2,3 | 2,3 | 2,3 |
| Film tricouche B/A/C | MFI₍ₐ₎/MFI_{(PE)} | 1,3 | 13 | 10,9 | 4,3 |
| | Aspect du film | vagues de co-extrusion | - vagues de co-extrusion | - vagues de co-extrusion | vagues de co-extrusion |
| | | | - bords collants | - bords collants | |

## Revendications

1. Film multicouche comprenant :
- une couche adhésive A constituée par une composition HMPSA extrudable (a) ;
- une couche mince complexable B constituée d'une composition (b) d'un PolyEthylène (PE) noté PE(b) ; et
- une couche thermoscellable et sécable C constituée d'une composition (c) d'un PolyEthylène (PE) noté PE(c) ;
les couches B et C étant liées entre elles par la couche A et ledit film étant **caractérisé en ce que** :
(i) les indices d'écoulement des compositions (b) et (c), mesurés en g/10 minutes pour une température de 190°C et un poids total de 2,16 kg, et notés respectivement MFI(b) et MFI(c), sont chacun compris entre 2,5 et 15 g/10 minutes; et
(ii) l'indice d'écoulement de la composition HMPSA (a), mesuré en g/10 minutes pour une température de 190°C et un poids total de 2,16 kg, et noté MFI(a), est tel que les rapports MFI(a)/MFI(b) et MFI(a)/MFI(c) sont chacun compris entre 1,5 et 10.

2. Film multicouche selon la revendication 1, **caractérisé en ce que** les indices d'écoulement MFI(b) et MFI(c) sont chacun compris entre 3 et 10 g/10 minutes, et les rapports MFI(a)/MFI(b) et MFI(a)/MFI(c) sont chacun compris entre 2 et 9.

3. Film multicouche selon l'une des revendications 1 ou 2, **caractérisé en ce que** MFI(a) est compris dans un domaine allant de 4 à 100 g/10 minutes.

4. Film multicouche selon l'une des revendications 1 à 3, **caractérisé en ce que** la composition HMPSA extrudable (a) comprend, sur la base du poids total de ladite composition:
- de 40 à 70 % en poids d'une composition (a1) de copolymères blocs styréniques comprenant au moins un bloc élastomère, ladite composition (a1) étant constituée, sur la base de son poids total :
- de 10 à 90 % en poids d'au moins un copolymère dibloc choisi dans le groupe comprenant les SI, SBI, SIB, SB, SEB, et SEP, et
- de 10 à 90 % en poids d'au moins un copolymère tribloc choisi dans le groupe comprenant les SIS, SIBS, SBS, SEBS et SEPS ;
la teneur en motifs styréniques totale de ladite composition (a1) variant de 10 à 40 % en poids sur la base du poids total de (a1) ; et
- de 30 à 60 % en poids d'une ou plusieurs résines tackifiantes (a2).

5. Film multicouche selon l'une des revendications 1 à 4, **caractérisé en ce que** les compositions (b) et (c) sont des compositions d'un même PolyEthylène PE.

6. Film multicouche selon l'une des revendications 1 à 5, **caractérisé en ce que** PE(b) et PE(c) sont chacun un PE basse densité.

7. Film multicouche selon l'une des revendications 1 à 6, **caractérisé en ce que** les compositions (b) et (c) sont constituées d'un PE.

8. Film multicouche selon l'une des revendications 1 à 6, **caractérisé en ce que** les compositions (b) et (c) sont des compositions à base de PE qui comprennent, outre ledit PE, un additif choisi parmi un agent anti-buée, un agent d'aide au procédé, un agent glissant et/ou un agent anti-bloquant.

9. Film multicouche selon l'une des revendications 1 à 8, **caractérisé en ce qu'**il est constitué des 3 couches A, B et C.

10. Film multicouche selon l'une des revendications 1 à 8, **caractérisé en ce qu'**il comprend, outre les 3 couches A, B et C, des couches minces additionnelles choisies parmi :
- une couche rigide,
- une couche imprimable, ou encore
- une couche à effet barrière contre l'oxygène, la vapeur d'eau ou bien le monoxyde de carbone.

11. Film multicouche selon l'une des revendications 1 à 10, **caractérisé en ce que** son épaisseur totale varie dans un domaine allant de 20 à 300 µm.

12. Film multicouche selon l'une des revendications 1 à 11, **caractérisé en ce que** l'épaisseur de la couche adhésive A varie dans un domaine allant de 5 à 50 µm et l'épaisseur de la couche thermoscellable et sécable C varie dans un domaine allant de 5 à 25 µm.

13. Procédé de fabrication du film multicouche tel que défini dans l'une des revendications 1 à 12, **caractérisé en ce qu'**il comprend la co-extrusion à plat de la composition HMPSA (a) et des compositions (b) et (c) à une température comprise entre 150°C et 250°C.

14. Utilisation du film multicouche tel que défini dans l'une des revendications 1 à 12 pour la fabrication d'emballages refermables.

15. Utilisation du film multicouche selon la revendication 14 pour la fabrication du film d'operculage de barquettes refermables.

## Patentansprüche

1. Mehrschichtige Folie, die Folgendes umfasst:
- eine Klebstoffschicht A, die aus einer extrudierbaren HMPSA-Zusammensetzung (a) besteht;
- eine komplexierbare dünne Schicht B, die aus einer Zusammensetzung (b) eines als PE(b) bezeichneten Polyethylens (PE) besteht; und
- eine heißsiegelbare und spaltbare Schicht C, die aus einer Zusammensetzung (c) eines als PE(c) bezeichneten Polyethylens (PE) besteht;
wobei die Schichten B und C durch die Schicht A miteinander verbunden sind und die Folie **dadurch gekennzeichnet ist, dass**:
(i) die Schmelzflussindices der Zusammensetzungen (b) bzw. (c), gemessen in g/10 Minuten bei einer Temperatur von 190 °C und einem Gesamtgewicht von 2,16 kg und als MFI(b) bzw. MFI(c) bezeichnet, jeweils zwischen 2,5 und 15 g/10 Minuten betragen; und
(ii) der Schmelzflussindex der HMPSA-Zusammensetzung (a), gemessen in g/10 Minuten bei einer Temperatur von 190 °C und einem Gesamtgewicht von 2,16 kg und als MFI(a) bezeichnet, so ist, dass die Verhältnisse MFI(a)/MFI(b) und MFI(a)/MFI(c) jeweils zwischen 1,5 und 10 liegen.

2. Mehrschichtige Folie nach Anspruch 1, **dadurch gekennzeichnet, dass** die Schmelzflussindices MFI(b) und MFI(c) jeweils zwischen 3 und 10 g/10 Minuten liegen und die Verhältnisse MFI(a)/MFI(b) und MFI(a)/MFI(c) jeweils zwischen 2 und 9 liegen.

3. Mehrschichtige Folie nach einem der Ansprüche 1 oder 2, **dadurch gekennzeichnet, dass** MFI(a) in einem Bereich von 4 bis 100 g/10 Minuten liegt.

4. Mehrschichtige Folie nach einem der Ansprüche 1 bis 3, **dadurch gekennzeichnet, dass** die extrudierbare HMPSA-Zusammensetzung (a) Folgendes umfasst, bezogen auf das Gesamtgewicht der Zusammensetzung:
- 40 bis 70 Gew.-% einer Zusammensetzung (a1) von Styrol-Blockcopolymeren, die mindestens einen elastomeren Block umfassen, wobei die Zusammensetzung (a1) aus Folgendem besteht, bezogen auf ihr Gesamtgewicht:
- 10 bis 90 Gew.-% mindestens eines Diblockcopolymers, das aus der SI, SBI, SIB, SB, SEB und SEP umfassenden Gruppe ausgewählt ist, und
- 10 bis 90 Gew.-% mindestens eines Triblockcopolymers, das aus der SIS, SIBS, SBS, SEBS und SEPS umfassenden Gruppe ausgewählt ist;
wobei der Gesamtgehalt an Styroleinheiten der Zusammensetzung (a1) von 10 bis 40 Gew.-% variiert, bezogen auf das Gesamtgewicht von (a1); und
- 30 bis 60 Gew.-% eines oder mehrerer klebrigmachender Harze (a2).

5. Mehrschichtige Folie nach einem der Ansprüche 1 bis 4, **dadurch gekennzeichnet, dass** es sich bei den Zusammensetzungen (b) und (c) um Zusammensetzungen desselben Polyethylens PE handelt.

6. Mehrschichtige Folie nach einem der Ansprüche 1 bis 5, **dadurch gekennzeichnet, dass** es sich bei PE(b) und PE(c) jeweils um ein PE niedriger Dichte handelt.

7. Mehrschichtige Folie nach einem der Ansprüche 1 bis 6, **dadurch gekennzeichnet, dass** die Zusammensetzungen (b) und (c) aus einem PE bestehen.

8. Mehrschichtige Folie nach einem der Ansprüche 1 bis 6, **dadurch gekennzeichnet, dass** es sich bei den Zusammensetzungen (b) und (c) um Zusammensetzungen auf der Grundlage von PE handelt, die außer dem PE ein Additiv umfassen, das aus einem beschlagverhindernden Mittel, einem Verarbeitungshilfsmittel, einem Gleitmittel und/oder einem Antihaftmittel ausgewählt ist.

9. Mehrschichtige Folie nach einem der Ansprüche 1 bis 8, **dadurch gekennzeichnet, dass** sie aus 3 Schichten A, B und C besteht.

10. Mehrschichtige Folie nach einem der Ansprüche 1 bis 8, **dadurch gekennzeichnet, dass** sie außer den 3 Schichten A, B und C zusätzliche dünne Schichten umfasst, die ausgewählt sind aus:
- einer starren Schicht,
- einer bedruckbaren Schicht oder sogar
- einer Schicht mit einer Barrierewirkung gegen Sauerstoff, Wasserdampf oder Kohlenmonoxid.

11. Mehrschichtige Folie nach einem der Ansprüche 1 bis 10, **dadurch gekennzeichnet, dass** ihre Gesamtdicke in einem Bereich von 20 bis 300 µm variiert.

12. Mehrschichtige Folie nach einem der Ansprüche 1 bis 11, **dadurch gekennzeichnet, dass** die Dicke der Klebstoffschicht A in einem Bereich von 5 bis 50 µm variiert und die Dicke der heißsiegelbaren und spaltbaren Schicht C in einem Bereich von 5 bis 25 µm variiert.

13. Verfahren zur Herstellung einer mehrschichtigen Folie gemäß der Definition in einem der Ansprüche 1 bis 12, **dadurch gekennzeichnet, dass** es die Flachfolien-Coextrusion der HMPSA-Zusammensetzung (a) und der Zusammensetzungen (b) und (c) bei einer Temperatur zwischen 150 °C und 250 °C umfasst.

14. Verwendung der mehrschichtigen Folie gemäß der Definition in einem der Ansprüche 1 bis 12 zur Herstellung von wiederverschließbaren Verpackungen.

15. Verwendung der mehrschichtigen Folie nach Anspruch 14 zur Herstellung einer Deckelfolie von wiederverschließbaren Schalen.

## Claims

1. A multilayer film comprising:
- an adhesive layer A consisting of an extrudable HMPSA composition (a);
- a complexable thin layer B consisting of a PolyEthylene (PE) composition (b) denoted PE(b); and
- a heat-sealable and breakable layer C consisting of a PolyEthylene (PE) composition (c) denoted PE(c);
layers B and C being bonded together by layer A and said film being **characterized in that**:
(i) the melt flow indices of compositions (b) and (c), measured in g/10 minutes at a temperature of 190°C and a total weight of 2.16 kg, and denoted MFI(b) and MFI(c), respectively, are each between 2.5 and 15 g/10 minutes; and
(ii) the melt flow index of the HMPSA composition (a), measured in g/10 minutes at a temperature of 190°C and a total weight of 2.16 kg, and denoted MFI(a), is such that the ratios MFI(a)/MFI(b) and MFI(a)/MFI(c) are each between 1.5 and 10.

2. The multilayer film as claimed in claim 1, **characterized in that** the melt flow indices MFI(b) and MFI(c) are each between 3 and 10 g/10 minutes, and the ratios MFI(a)/MFI(b) and MFI(a)/MFI(c) are each between 2 and 9.

3. The multilayer film as claimed in either of claims 1 and 2, **characterized in that** the MFI(a) is in a range from 4 to 100 g/10 minutes.

4. The multilayer film as claimed in one of claims 1 to 3, **characterized in that** the extrudable HMPSA composition (a) comprises, on the basis of the total weight of said composition:
- from 40% to 70% by weight of a composition (a1) of styrene block copolymers comprising at least one elastomer block, said composition (a1) consisting, on the basis of its total weight:
- of 10% to 90% by weight of at least one diblock copolymer chosen from the group comprising SI, SBI, SIB, SB, SEB and SEP, and
- of 10% to 90% by weight of at least one triblock copolymer chosen from the group comprising SIS, SIBS, SBS, SEBS and SEPS;
the total content of styrene units of said composition (a1) ranging from 10% and 40% by weight on the basis of the total weight of (a1); and
- from 30% to 60% by weight of one or more tackifying resins (a2).

5. The multilayer film as claimed in one of claims 1 to 4, **characterized in that** compositions (b) and (c) are compositions of the same PolyEthylene PE.

6. The multilayer film as claimed in one of claims 1 to 5, **characterized in that** PE(b) and PE(c) are each a low density PE.

7. The multilayer film as claimed in one of claims 1 to 6, **characterized in that** composition (b) and (c) consist of a PE.

8. The multilayer film as claimed in one of claims 1 to 6, **characterized in that** compositions (b) and (c) are PE-based compositions which comprise, in addition to said PE, an additive chosen from an anti-fogging agent, a processing aid, a slip agent and/or an antiblocking agent.

9. The multilayer film as claimed in one of claims 1 to 8, **characterized in that** it consists of three layers A, B and C.

10. The multilayer film as claimed in one of claims 1 to 8, **characterized in that** it comprises, in addition to the three layers A, B and C, additional thin layers chosen from:
- a rigid layer,
- a printable layer, or
- a layer with a barrier effect against oxygen, water vapor or carbon monoxide.

11. The multilayer film as claimed in one of claims 1 to 10, **characterized in that** its total thickness varies in a range from 20 to 300 µm.

12. The multilayer film as claimed in one of claims 1 to 11, **characterized in that** the thickness of the adhesive layer A varies in a range from 5 to 50 µm and the thickness of the heat-sealable and breakable layer C varies in a range from 5 to 25 µm.

13. A process for manufacturing the multilayer film as defined in one of claims 1 to 12, **characterized in that** it comprises the flat sheet coextrusion of the HMPSA composition (a) and of compositions (b) and (c) at a temperature of between 150°C and 250°C.

14. The use of the multilayer film as defined in one of claims 1 to 12, for the manufacture of resealable packagings.

15. The use of the multilayer film as claimed in claim 14, for the manufacture of the cover film of resealable trays.
